# EUROPEAN PATENT APPLICATION

(11) **EP 4 534 516 A1**
(43) Date of publication of application: **09.04.2025**
(21) Application number: 22944783.4
(22) Date of filing: 31.05.2022
(51) Int. Cl.: C07C 1/00, C07C 9/04

(54) **METHANE GENERATION SYSTEM**

(71) Applicant: MITSUBISHI ELECTRIC CORPORATION, Chiyoda-ku Tokyo 100-8310 (JP)
(72) Inventor: ONAKA, Yoji, Tokyo 100-8310 (JP); TANISHIMA, Makoto, Tokyo 100-8310 (JP); SHINOKI, Toshio, Tokyo 100-8310 (JP); KAWAMOTO, Makoto, Tokyo 100-8310 (JP); NAKASHIMA, Seiji, Tokyo 100-8310 (JP)
(74) Representative: Meissner Bolte Partnerschaft mbB
(86) International application number: PCT/JP2022/022028
(87) International publication number: WO 2023/233494

(57) **Abstract**

A methane generation system according to the present invention includes a water supply path that supplies water or water vapor, a carbon dioxide supply path that supplies carbon dioxide, a power supply path that supplies power, an SOEC co-electrolysis device to which the water supply path, the carbon dioxide supply path and the power supply path are connected, a methane reactor, a connection path that connects the SOEC co-electrolysis device and the methane reactor, and a first heat exchange section that performs heat exchange between the SOEC co-electrolysis device and the methane reactor.

## Description

### Technical Field

The present invention relates to a methane generation system.

### Background Art

In the related art, a methanation system is known that improves the conversion efficiency of water into methane by reusing the reaction heat of methane in a methanation reaction section in a water vapor generation section when producing methane using carbon dioxide, water, and electricity (Patent Document 1).

### Citation List

### Patent Document

Patent Document 1: Japanese Unexamined Patent Application, First Publication JP 2022- 22 978 A

### Summary of the Invention

### Problem to be Solved by the Invention

In a methanation system using a solid oxide electrolysis cell (SOEC) co-electrolysis device that performs electrolysis (co-electrolysis) of carbon dioxide and water vapor simultaneously at a high temperature of 500 °C or higher, during a step of generating methane from water, electricity, and carbon dioxide in the SOEC co-electrolysis device, merely reusing the heat from the methane reaction in the methanation reaction section may be insufficient in terms of amount of heat, and there is possibility of reducing the methane conversion efficiency or causing instability in the methane generation amount.

The present invention has been made in view of such a background and aims to effectively remove reaction heat from a methane reactor by thermally connecting an SOEC co-electrolysis device and a methanation reaction section (methane reactor) to each other and exchanging heat therebetween, thereby improving methane conversion efficiency by reusing the reaction heat in the SOEC co-electrolysis device and stabilizing the methane generation amount.

### Means to Solve the Problem

One aspect of a methane generation system according to the present invention includes a water supply path that supplies water or water vapor, a carbon dioxide supply path that supplies carbon dioxide, a power supply path that supplies power, an SOEC co-electrolysis device to which the water supply path, the carbon dioxide supply path and the power supply path are connected, a methane reactor, a connection path that connects the SOEC co-electrolysis device and the methane reactor, and a first heat exchange section that performs heat exchange between the SOEC co-electrolysis device and the methane reactor.

One aspect of a methane generation system according to the present invention includes a water supply path that supplies water or water vapor, a carbon dioxide supply path that supplies carbon dioxide, a power supply path that supplies power, an SOEC co-electrolysis device to which the water supply path, the carbon dioxide supply path and the power supply path are connected, a methane reactor, a connection path that connects the SOEC co-electrolysis device and the methane reactor, a first heat exchange section that performs heat exchange between the SOEC co-electrolysis device and the methane reactor, and a preliminary heat exchange section that heats the water or water vapor supplied through the water supply path to the SOEC co-electrolysis device by reaction heat of the methane reactor.

### Effects of the Invention

According to the present invention, the methane conversion efficiency can be improved by reusing the methane reaction heat in the SOEC co-electrolysis device.

### Brief Description of the Drawings

FIG. 1 A schematic diagram showing a front view of a methane generation system according to Embodiment 1.
FIG. 2 A schematic diagram showing a front view of a methane generation system according to Embodiment 2.
FIG. 3 A schematic diagram showing a front view of a methane generation system according to Embodiment 3.
FIG. 4 A schematic diagram showing a front view of a methane generation system according to Embodiment 4.
FIG. 5 A schematic diagram showing a front view of a methane generation system according to Embodiment 5.
FIG. 6 A schematic diagram showing a front view of a methane generation system according to Embodiment 6.
FIG. 7 A schematic diagram showing a front view of a methane generation system according to Embodiment 7.
FIG. 8 A schematic diagram showing a front view of a methane generation system according to Embodiment 8.
FIG. 9 A schematic diagram showing a front view of a methane generation system according to Embodiment 9.

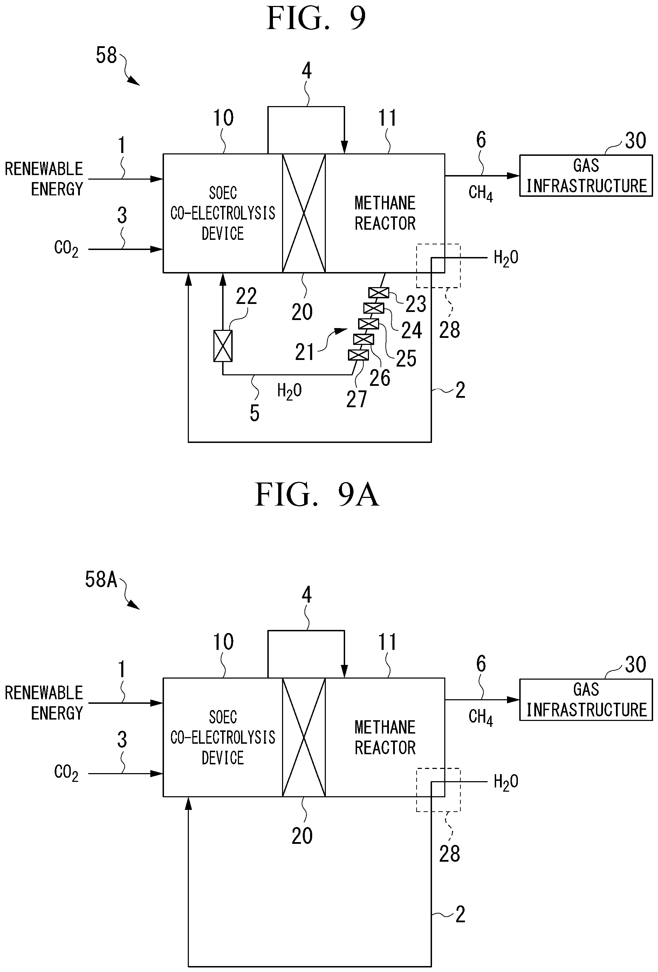

FIG. 9A A schematic diagram showing a front view of a methane generation system according to Embodiment 9A.

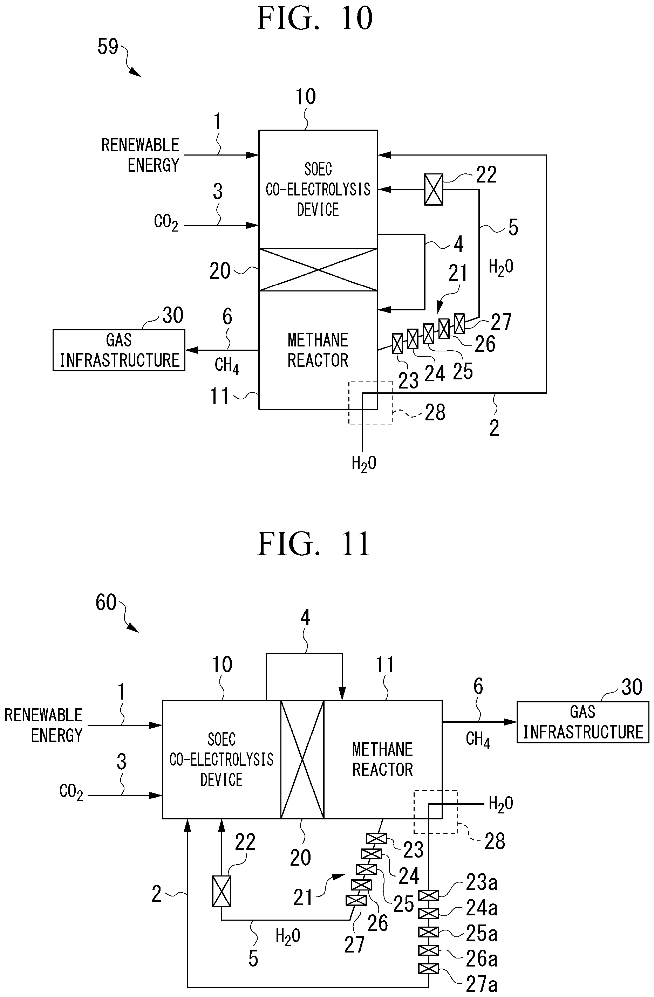

FIG. 10 A schematic diagram showing a front view of the methane generation system according to Embodiment 10.
FIG. 11 A schematic diagram showing a front view of a methane generation system according to Embodiment 11.

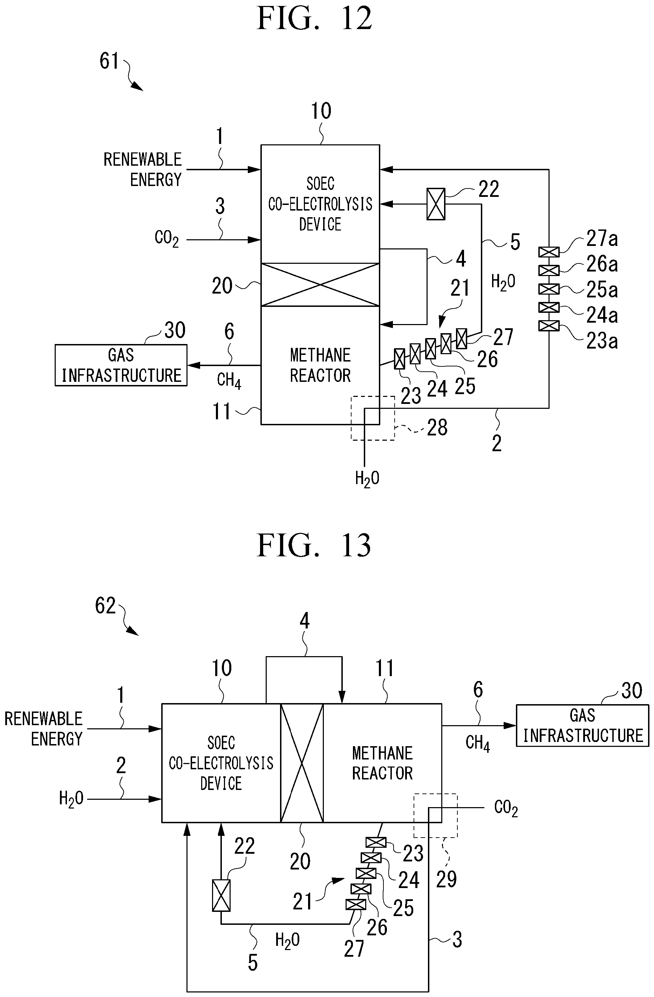

FIG. 12 A schematic diagram showing a front view of a methane generation system according to Embodiment 12.
FIG. 13 A schematic diagram showing a front view of a methane generation system according to Embodiment 13.

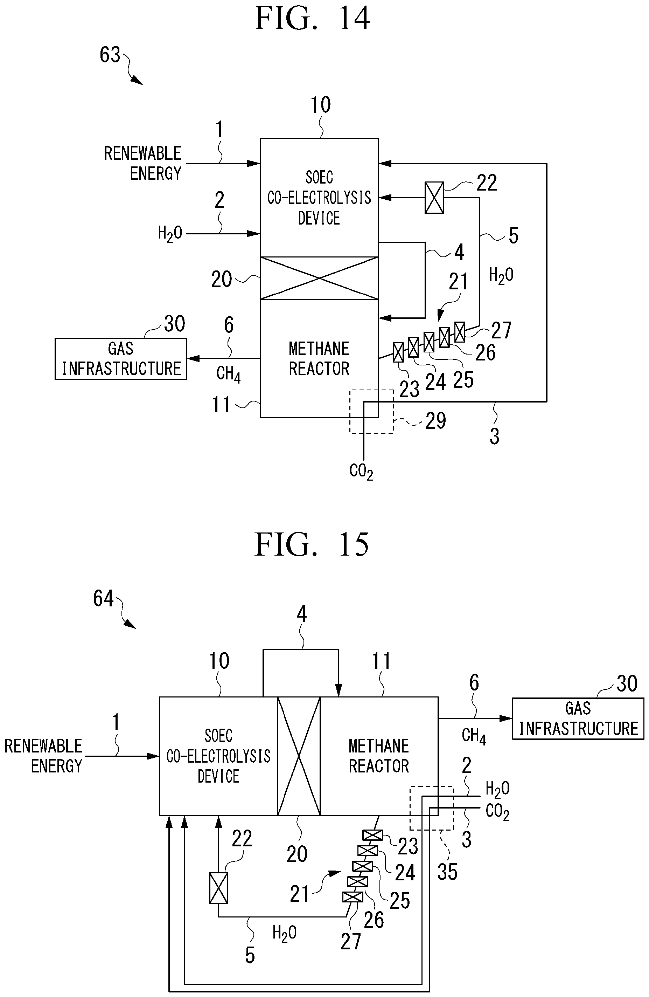

FIG. 14 A schematic diagram showing a front view of a methane generation system according to Embodiment 14.
FIG. 15 A schematic diagram showing a front view of a methane generation system according to Embodiment 15.

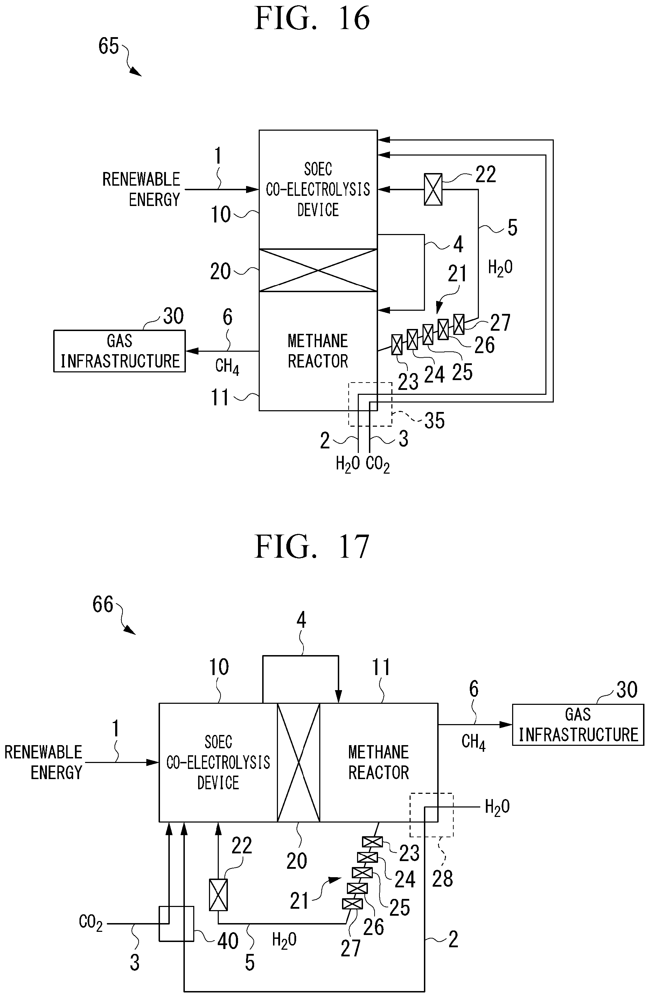

FIG. 16 A schematic diagram showing a front view of a methane generation system according to Embodiment 16.
FIG. 17 A schematic diagram showing a front view of a methane generation system according to Embodiment 17.

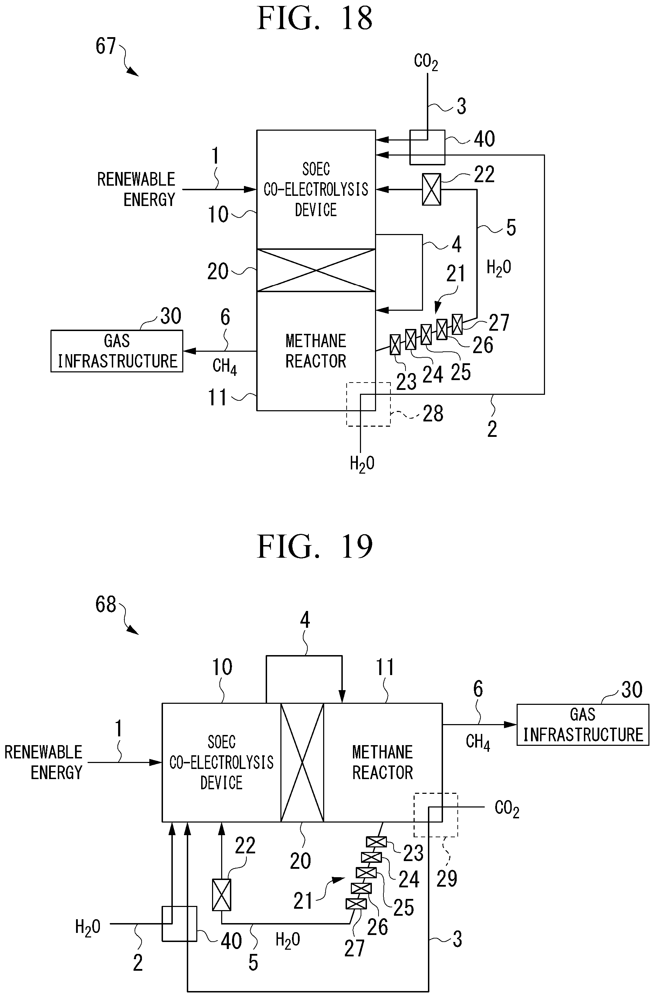

FIG. 18 A schematic diagram showing a front view of a methane generation system according to Embodiment 18.
FIG. 19 A schematic diagram showing a front view of a methane generation system according to Embodiment 19.

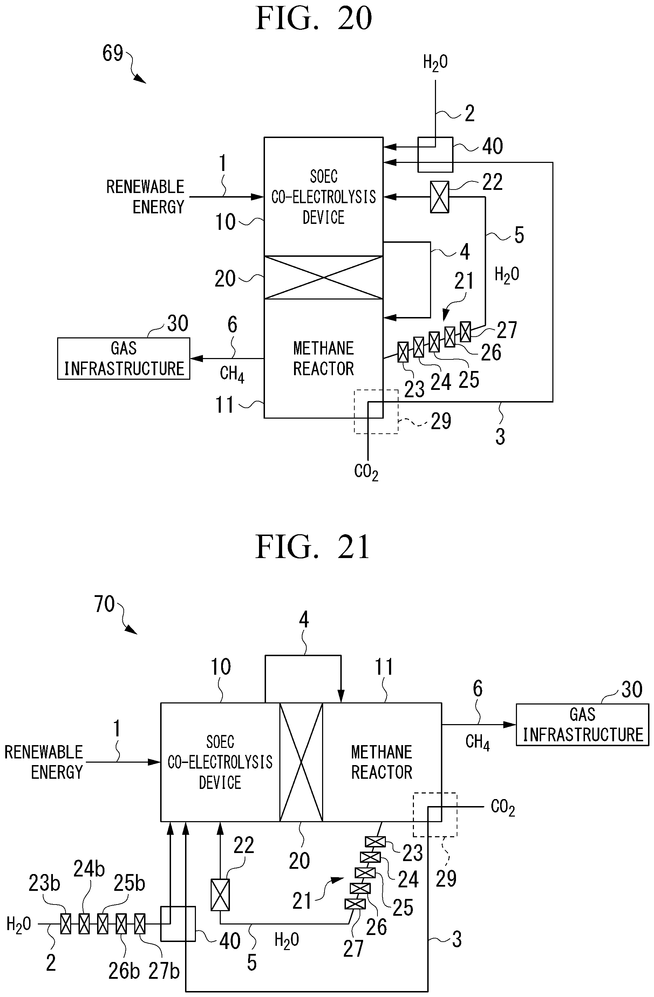

FIG. 20 A schematic diagram showing a front view of a methane generation system according to Embodiment 20.
FIG. 21 A schematic diagram showing a front view of a methane generation system according to Embodiment 21.

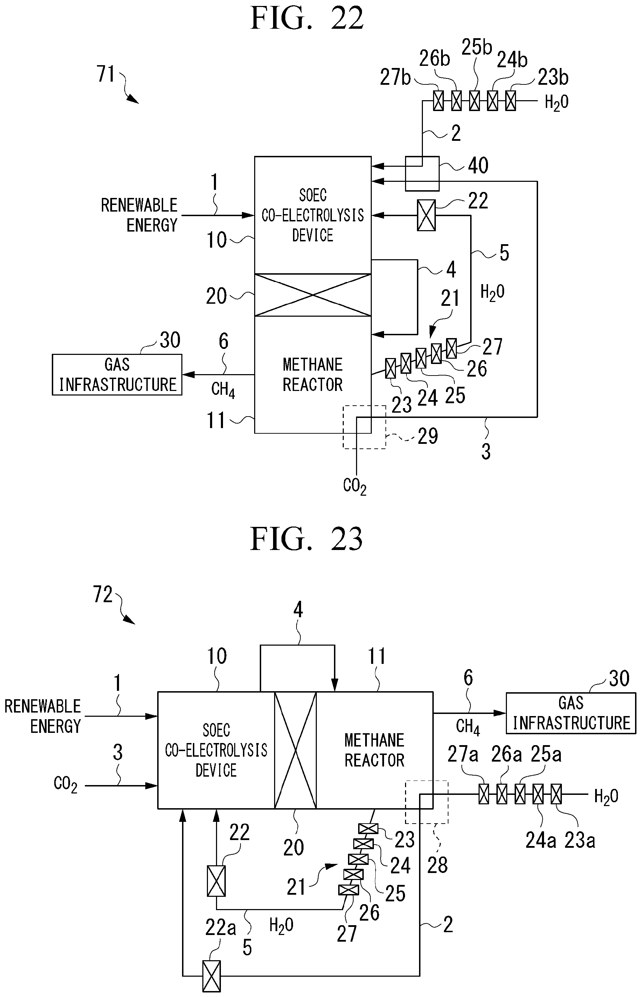

FIG. 22 A schematic diagram showing a front view of a methane generation system according to Embodiment 22.
FIG. 23 A schematic diagram showing a front view of a methane generation system according to Embodiment 23.

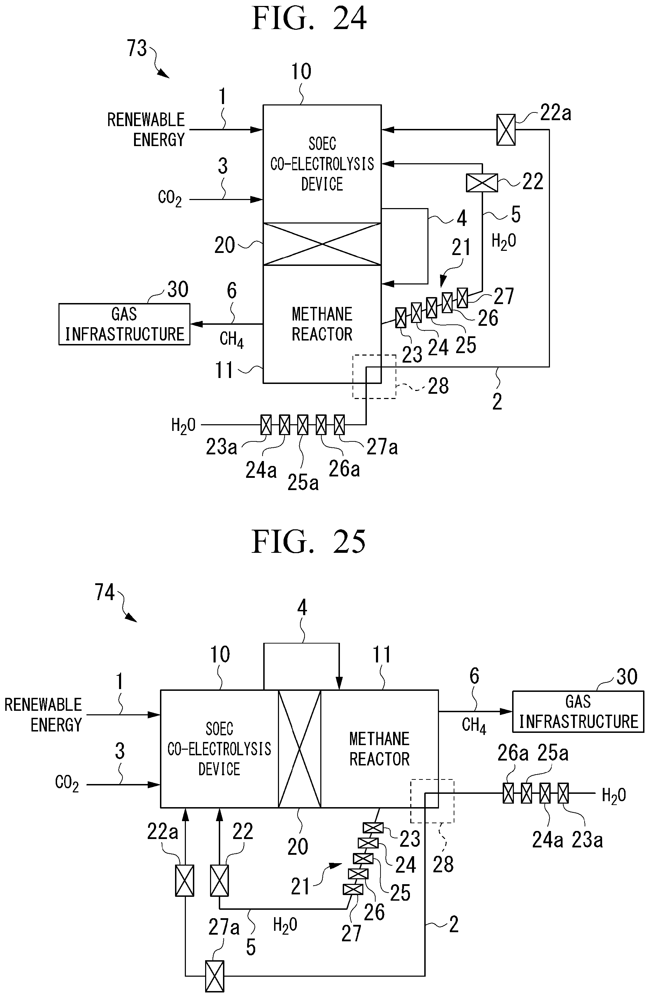

FIG. 24 A schematic diagram showing a front view of a methane generation system according to Embodiment 24.
FIG. 25 A schematic diagram showing a front view of a methane generation system according to Embodiment 25.

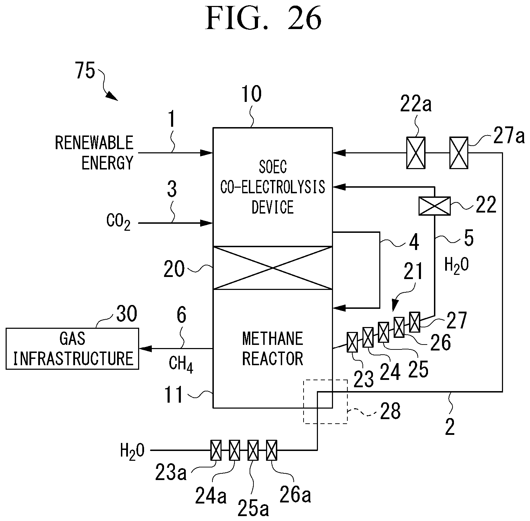

FIG. 26 A schematic diagram showing a front view of a methane generation system according to Embodiment 26.

### Description of Embodiments

### Embodiment 1

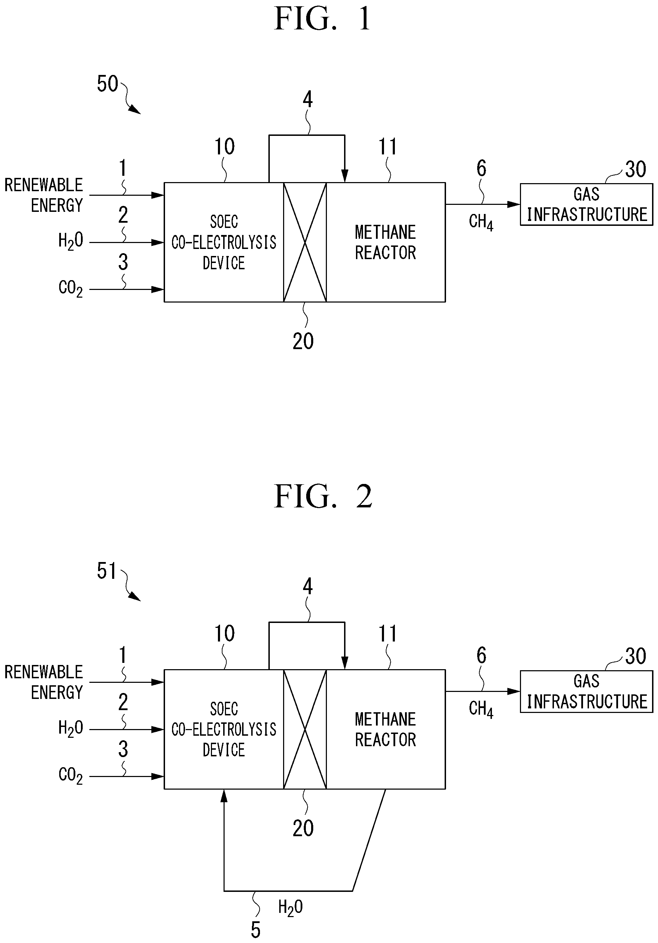

Hereinafter, a methane generation system 50 according to Embodiment 1 of the present invention will be described with reference to FIG. 1.

The methane generation system 50 includes an SOEC co-electrolysis device 10, a methane reactor 11, and a first heat exchange section 20 thermally connected to both the SOEC co-electrolysis device 10 and the methane reactor 11. In the example of FIG. 1, the SOEC co-electrolysis device 10, the first heat exchange section 20, and the methane reactor 11 are arranged side by side in a horizontal direction. A power supply path 1 for supplying power, a water supply path 2 for supplying water (H₂O) or water vapor, and a carbon dioxide supply path 3 for supplying carbon dioxide (CO₂) are connected to the SOEC co-electrolysis device 10. The water or water vapor and the carbon dioxide which are supplied to the SOEC co-electrolysis device 10 from the water supply path 2 and the carbon dioxide supply path 3 are simultaneously electrolyzed in the SOEC co-electrolysis device 10 and converted into hydrogen and carbon monoxide. The water or water vapor flowing in the water supply path 2 and the carbon dioxide flowing in the carbon dioxide supply path 3 are moved to the SOEC co-electrolysis device 10 by obtaining kinetic energy from a fluid machine such as a pump or a blower (not shown).

The hydrogen and carbon monoxide converted by the SOEC co-electrolysis device 10 through electrolysis are supplied to the methane reactor 11 via a connection path 4 that connects the SOEC co-electrolysis device 10 and the methane reactor 11.

The hydrogen and carbon monoxide supplied to the methane reactor 11 are converted into methane (CH₄) and water in the methane reactor 11, and the methane is supplied to an external gas infrastructure 30 via a gas path 6.

Here, since the reaction performed by the SOEC co-electrolysis device 10 is an endothermic reaction, heat is required for the reaction. On the other hand, since the reaction performed in the methane reactor 11 is an exothermic reaction, heat is generated. Therefore, the heat generated in the exothermic reaction of the methane reactor 11 and the heat required for the SOEC co-electrolysis device 10 are exchanged through the first heat exchange section 20. In this way, by reusing the heat generated in the methane reactor 11 in the SOEC co-electrolysis device 10, the heat generated in the methane reactor 11 can be effectively removed. Additionally, since the heat required for the SOEC co-electrolysis device 10 can be supplied by the heat generated by the methane reactor 11, the methane conversion efficiency can be improved, and the methane generation amount can be stabilized.

Here, it is desirable that the power supplied to the SOEC co-electrolysis device 10 be renewable energy such as wind power or solar power. Alternatively, the power may be generated from a solid oxide fuel cell (SOFC). The SOFC is a device that uses hydrogen as a fuel, extracts electrons from oxygen taken in from the air, and generates an external current in a process where the oxygen (oxygen ion), from which the electrons have been extracted, reacts with hydrogen to produce water. The power supplied to the SOEC co-electrolysis device 10 does not necessarily have to be from renewable energy or SOFC.

In addition, the carbon dioxide supplied to the SOEC co-electrolysis device 10 may be, for example, carbon dioxide discharged from the SOFC, carbon dioxide collected from the atmosphere by direct air capture (DAC), or carbon dioxide supplied from other carbon dioxide supply sources.

Here, the configuration of the first heat exchange section 20 is not particularly limited, and any known heat exchanger capable of performing heat exchange between the SOEC co-electrolysis device 10 and the methane reactor 11 may be used. For example, known heat exchangers such as multi-tube heat exchangers, plate heat exchangers, coil heat exchangers, double pipes, or spiral heat exchangers can be used.

### Embodiment 2

Hereinafter, a methane generation system 51 according to Embodiment 2 of the present invention will be described with reference to FIG. 2. The same components as those in Embodiment 1 shown in FIG. 1 are denoted by the same reference numerals, and their descriptions are omitted. Only the components that are different from those of Embodiment 1 will be described.

The methane generation system 51 includes a heat transfer flow path 5 that supplies at least a part of the water or water vapor generated and released in the methane reactor 11 to the SOEC co-electrolysis device 10.

With such a configuration, at least a part of the water of high temperature or water vapor generated in the methane reactor 11 is supplied to the SOEC co-electrolysis device 10 via the heat transfer flow path 5. Therefore, the heat from the water of high temperature or water vapor can be reused by the SOEC co-electrolysis device 10. Therefore, since the heat required for the SOEC co-electrolysis device 10 can be supplied by the heat generated by the methane reactor 11, the methane conversion efficiency can be improved, and the methane generation amount can be stabilized.

### Embodiment 3

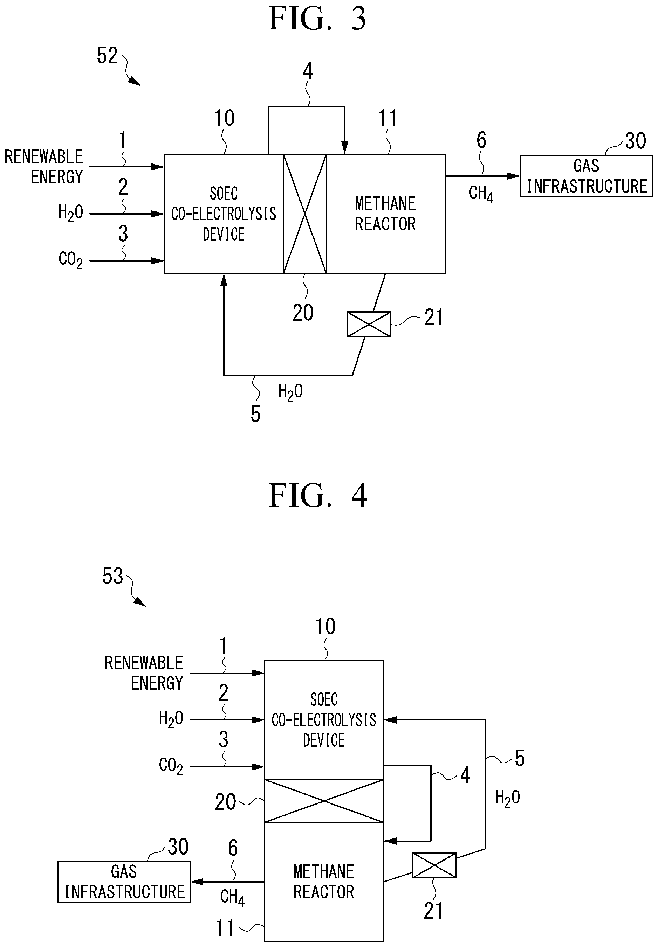

Hereinafter, a methane generation system 52 according to Embodiment 3 of the present invention will be described with reference to FIG. 3. The same components as those in Embodiment 2 shown in FIG. 2 are denoted by the same reference numerals, and their descriptions will be omitted. Only the components that are different from those in Embodiment 2 will be described.

The methane generation system 52 includes a second heat exchange section 21 that exchanges heat with external exhaust heat in the heat transfer flow path 5.

The water or water vapor flowing in the heat transfer flow path 5 can acquire a greater amount of heat through heat exchange with the external exhaust heat by the second heat exchange section 21, in addition to the heat generated in the methane reactor 11. Therefore, the required amount of heat in the SOEC co-electrolysis device 10 can be supplied by the heat generated in the methane reactor 11 and the external exhaust heat, thereby enhancing methane conversion efficiency and stabilizing methane generation amount.

Here, the external exhaust heat includes, in order from low temperature to high temperature, ventilation exhaust heat, air conditioning exhaust heat, hot water supply exhaust heat, boiler exhaust heat, and SOFC fuel cell exhaust heat.

The ventilation exhaust heat is, for example, exhaust heat generated when air trapped inside a building, an office building or the like located on a site of a factory or the like where the methane generation system 52 is installed is exhausted to the outside.

Air conditioning exhaust heat is, for example, exhaust heat from air conditioning systems installed in a building, an office building or the like located on a site of a factory or the like where the methane generation system 52 is installed.

Hot water supply exhaust heat is, for example, exhaust heat from a hot water supply device provided in a building, an office building or the like located on a site of a factory or the like where the methane generation system 52 is installed.

The boiler exhaust heat is, for example, exhaust heat from a boiler provided in a building, an office building, or the like located on a site of a factory or the like where the methane generation system 52 is installed.

The SOFC fuel cell exhaust heat is exhaust heat generated during operation of the SOFC. Since the operating temperature of the SOFC is high temperature of approximately 1000 °C, it is possible to extract high-temperature exhaust heat.

The SOEC co-electrolysis device 10 and the methane reactor 11 may be physically integrally formed. Here, forming the SOEC co-electrolysis device 10 and the methane reactor 11 in a physically integral manner means that the SOEC co-electrolysis device 10 and the methane reactor 11 may be formed as one member using the same member. Alternatively, the SOEC co-electrolysis device 10 and the methane reactor 11, formed of different members, may be integrated by welding. Alternatively, the SOEC co-electrolysis device 10 and the methane reactor 11, formed of different members, may be integrated through fastening members such as bolts and nuts.

### Embodiment 4

Hereinafter, a methane generation system 53 according to Embodiment 4 of the present invention will be described with reference to FIG. 4. The same components as those in Embodiment 3 shown in FIG. 3 are denoted by the same reference numerals, and their descriptions will be omitted. Only the components that are different from those in Embodiment 3 will be described.

In the methane generation system 53, the SOEC co-electrolysis device 10 is provided at a position higher than the methane reactor 11. That is, the methane generation system 52 shown in FIG. 3 is a configuration rotated clockwise such that the SOEC co-electrolysis device 10 is positioned above the methane reactor 11. In this case, the SOEC co-electrolysis device 10, the first heat exchange section 20, and the methane reactor 11 are arranged in a vertical direction. As described above, a configuration in which the SOEC co-electrolysis device 10 is provided above the methane reactor 11 may be referred to as a vertical arrangement. Note that the SOEC co-electrolysis device 10 may be provided to directly face the methane reactor 11 without the first heat exchange section 20 interposed therebetween at a position higher than the methane reactor 11.

In the methane generation system 53 configured as such, the SOEC co-electrolysis device 10 is provided at a position higher than the methane reactor 11. Therefore, the temperature difference of the fluid present in the vicinity of the heat transfer surface between the SOEC co-electrolysis device 10 and the methane reactor 11 can be increased. Therefore, since the heat exchange performance between the SOEC co-electrolysis device 10 and the methane reactor 11 can be improved, the methane conversion efficiency can be enhanced.

### Embodiment 5

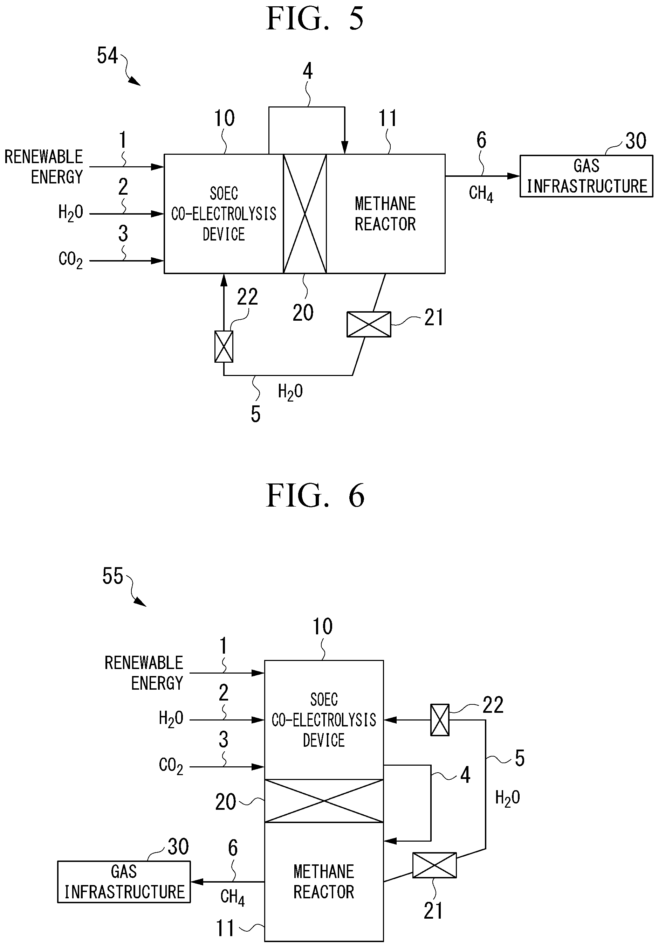

Hereinafter, a methane generation system 54 according to Embodiment 5 of the present invention will be described with reference to FIG. 5. The same components as those in Embodiment 3 shown in FIG. 3 are denoted by the same reference numerals, and their descriptions will be omitted. Only the components that are different from those in Embodiment 3 will be described.

The methane generation system 54 includes a first heater 22 in addition to the second heat exchange section 21 in the heat transfer flow path 5. In the example of FIG. 5, the first heater 22 is provided downstream of the second heat exchange section 21 in the flow direction of the water or water vapor flowing through the heat transfer flow path 5.

The water or water vapor flowing in the heat transfer flow path 5 can obtain the heat generated in the methane reactor 11, the heat obtained through heat exchange with the external exhaust heat by the second heat exchange section 21, and the heat obtained by the first heater 22. Therefore, the heat required for the SOEC co-electrolysis device 10 can be supplied by the heat generated in the methane reactor 11, the external exhaust heat, and the heat obtained from the first heater 22. Therefore, the methane conversion efficiency can be improved, and the methane generation amount can be stabilized.

### Embodiment 6

Hereinafter, a methane generation system 55 according to Embodiment 6 of the present invention will be described with reference to FIG. 6. The same components as those in Embodiment 5 shown in FIG. 5 are denoted by the same reference numerals, and their descriptions are omitted. Only the components that are different from those in Embodiment 5 will be described.

The methane generation system 55 has a configuration in which the methane generation system 54 of Embodiment 5 shown in FIG. 5 is arranged vertically, with the SOEC co-electrolysis device 10 provided above the methane reactor 11. Therefore, since the SOEC co-electrolysis device 10 is provided at a position higher than the methane reactor 11, the temperature difference of the fluid present in the vicinity of the heat transfer surface between the SOEC co-electrolysis device 10 and the methane reactor 11 can be increased. Accordingly, in addition to the effect obtained by the methane generation system 54 according to Embodiment 5 shown in FIG. 5, the heat exchange performance between the SOEC co-electrolysis device 10 and the methane reactor 11 can be improved, thereby enhancing the methane conversion efficiency and stabilizing the methane generation amount.

### Embodiment 7

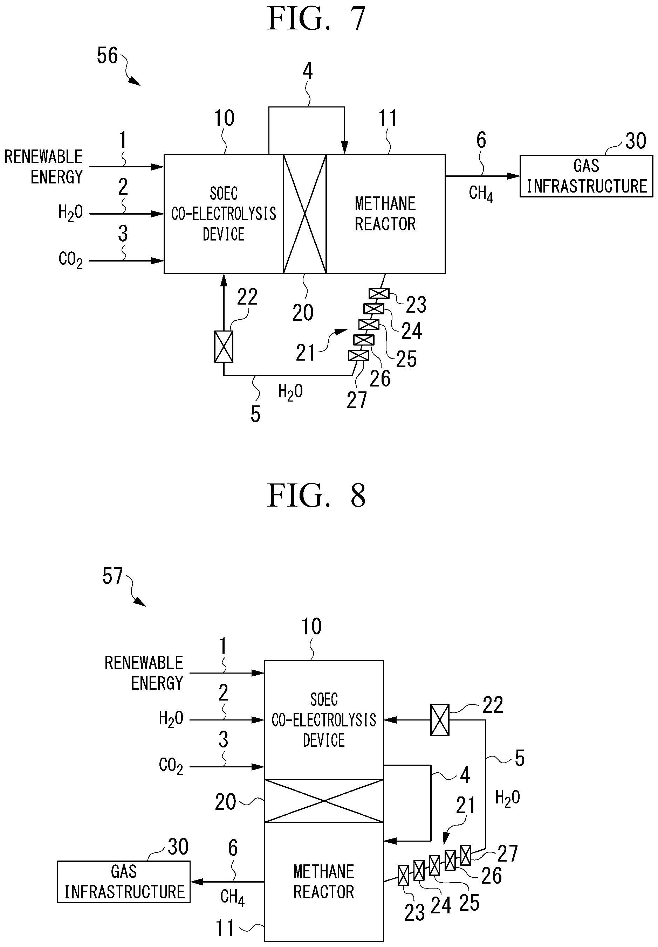

Hereinafter, a methane generation system 56 according to Embodiment 7 of the present invention will be described with reference to FIG. 7. The same components as those in Embodiment 5 shown in FIG. 5 are denoted by the same reference numerals, and their descriptions are omitted. Only the components that are different from those in Embodiment 5 will be described.

The methane generation system 56 includes at least any one of a third heat exchange section 23 that exchanges heat with external ventilation exhaust heat, a fourth heat exchange section 24 that exchanges heat with external air conditioning exhaust heat, a fifth heat exchange section 25 that exchanges heat with external hot water supply exhaust heat, a sixth heat exchange section 26 that exchanges heat with external boiler exhaust heat, or a seventh heat exchange section 27 that exchanges heat with external SOFC fuel cell exhaust heat, all of which heat water or water vapor flowing through the heat transfer flow path 5, in the second heat exchange section 21.

Here, the third heat exchange section 23, the fourth heat exchange section 24, the fifth heat exchange section 25, the sixth heat exchange section 26, and the seventh heat exchange section 27 are disposed upstream in the flow direction of the water or water vapor flowing through the heat transfer flow path 5, with the lower temperature heat exchange sections positioned further upstream.

Therefore, the third heat exchange section 23 having the lowest temperature is provided the most upstream with respect to the flow direction of the water or water vapor that flows through the heat transfer flow path 5, and the seventh heat exchange section 27 having the highest temperature is provided the most downstream with respect to the flow direction of the fluid that flows through the heat transfer flow path 5. The fourth heat exchange section 24, the fifth heat exchange section 25, and the sixth heat exchange section 26 are provided between the third heat exchange section 23 and the seventh heat exchange section 27 in order from the upstream side with respect to the flow direction of the water or water vapor flowing through the heat transfer flow path 5.

**In** the methane generation system 56 configured as such, water or water vapor flowing in the heat transfer flow path 5 undergoes heat exchange sequentially from the heat exchange section with a lower temperature to the heat exchange section with a higher temperature. Therefore, even an external heat source with a low temperature can be effectively used as a heat source for heating water or water vapor flowing in the heat transfer flow path 5.

**In** the example of FIG. 7, all of the third heat exchange section 23, the fourth heat exchange section 24, the fifth heat exchange section 25, the sixth heat exchange section 26, and the seventh heat exchange section 27 are provided, but only at least one or more of these need be provided. **In** a case where all of the third heat exchange section 23, the fourth heat exchange section 24, the fifth heat exchange section 25, the sixth heat exchange section 26, and the seventh heat exchange section 27 are provided, the effect of increasing the heat of the water or water vapor supplied to the SOEC co-electrolysis device 10 is maximized.

### Embodiment 8

Hereinafter, a methane generation system 57 according to Embodiment 8 of the present invention will be described with reference to FIG. 8. The same components as those in Embodiment 7 shown in FIG. 7 are denoted by the same reference numerals, and their descriptions will be omitted. Only the components that are different from those in Embodiment 7 will be described.

The methane generation system 57 has a configuration in which the methane generation system 56 of Embodiment 7 shown in FIG. 7 is arranged vertically, with the SOEC co-electrolysis device 10 provided above the methane reactor 11. Therefore, since the SOEC co-electrolysis device 10 is provided at a position higher than the methane reactor 11, the temperature difference of the fluid present in the vicinity of the heat transfer surface between the SOEC co-electrolysis device 10 and the methane reactor 11 can be increased. Therefore, in addition to the effect obtained by the methane generation system 56 according to Embodiment 7 shown in FIG. 7, the heat exchange performance between the SOEC co-electrolysis device 10 and the methane reactor 11 can be improved, thereby enhancing the methane conversion efficiency and stabilizing the methane generation amount.

### Embodiment 9

Hereinafter, a methane generation system 58 according to Embodiment 9 of the present invention will be described with reference to FIG. 9. The same components as those in Embodiment 7 shown in FIG. 7 are denoted by the same reference numerals, and their descriptions will be omitted. Only the components that are different from those in Embodiment 7 will be described.

The methane generation system 58 includes a first preliminary heat exchange section 28, where water or water vapor flowing through the water supply path 2 is heated by the reaction heat of the methane reactor 11, in the methane generation system 56 of Embodiment 7 shown in FIG. 7.

In the methane generation system 58 configured as such, since the first preliminary heat exchange section 28 increases the amount of heat of the water or water vapor supplied to the SOEC co-electrolysis device 10, it is possible to promote the electrolysis in the SOEC co-electrolysis device 10. Further, the first preliminary heat exchange section 28 can improve the methane conversion efficiency by dissipating the heat generated by the methane reactor 11.

### Embodiment 9A

FIG. 9A shows a configuration of a methane generation system 58A according to Embodiment 9A of the present invention. The methane generation system 58A according to Embodiment 9A has a configuration in which the heat transfer flow path 5 is removed from the methane generation system 58 according to Embodiment 9 shown in FIG. 9. That is, in the methane generation system 58 according to Embodiment 9, the configuration does not include the heat transfer flow path 5 and includes only the first preliminary heat exchange section 28. In this case, the water supply path 2, which includes the first preliminary heat exchange section 28, can also be considered as one of the heat transfer flow path.

This configuration can promote electrolysis in the SOEC co-electrolysis device 10 and improve the methane conversion efficiency of the methane reactor 11. Note that, also in the configuration including the first preliminary heat exchange section 28, which will be described in the following embodiments, the configuration without the heat transfer flow path 5 can also be adopted.

### Embodiment 10

Hereinafter, a methane generation system 59 according to Embodiment 10 of the present invention will be described with reference to FIG. 10. The same components as those in Embodiment 9 shown in FIG. 9 are denoted by the same reference numerals, and their descriptions will be omitted. Only the components different from those in Embodiment 9 will be described.

The methane generation system 59 has a configuration in which the methane generation system 58 of Embodiment 9 shown in FIG. 9 is arranged vertically, with the SOEC co-electrolysis device 10 provided above the methane reactor 11. Therefore, since the SOEC co-electrolysis device 10 is provided at a position higher than the methane reactor 11, the temperature difference of the fluid present in the vicinity of the heat transfer surface between the SOEC co-electrolysis device 10 and the methane reactor 11 can be increased. Accordingly, in addition to the effect obtained by the methane generation system 58 according to Embodiment 9 shown in FIG. 9, the heat exchange performance between the SOEC co-electrolysis device 10 and the methane reactor 11 can be improved, thereby enhancing the methane conversion efficiency and stabilizing the methane generation amount.

### Embodiment 11

Hereinafter, a methane generation system 60 according to Embodiment 11 of the present invention will be described with reference to FIG. 11. The same components as those in Embodiment 9 shown in FIG. 9 are denoted by the same reference numerals, and their descriptions will be omitted. Only the components that are different from those in Embodiment 6 will be described.

The methane generation system 60 includes at least any one of an eighth heat exchange section 23a that exchanges heat with external ventilation exhaust heat, a ninth heat exchange section 24a that exchanges heat with external air conditioning exhaust heat, a tenth heat exchange section 25a that exchanges heat with external hot water supply exhaust heat, an eleventh heat exchange section 26a that exchanges heat with external boiler exhaust heat, or a twelfth heat exchange section 27a that exchanges heat with external SOFC fuel cell exhaust heat, all of which heat the water or water vapor flowing through the water supply path 2, downstream of the first preliminary heat exchange section 28 with respect to the flow direction of the water or water vapor flowing in the water supply path 2.

Here, the eighth heat exchange section 23a, the ninth heat exchange section 24a, the tenth heat exchange section 25a, the eleventh heat exchange section 26a, and the twelfth heat exchange section 27a are provided in the water supply path 2 such that the heat exchange section with a lower temperature is disposed upstream with respect to the flow direction of the water or water vapor flowing through the water supply path 2.

Therefore, the eighth heat exchange section 23a having the lowest temperature is provided the most upstream with respect to the flow direction of the water or water vapor flowing through the water supply path 2, and the twelfth heat exchange section 27a having the highest temperature is provided the most downstream with respect to the flow direction of the water or water vapor flowing through the water supply path 2. The ninth heat exchange section 24a, the tenth heat exchange section 25a, and the eleventh heat exchange section 26a are provided between the eighth heat exchange section 23a and the twelfth heat exchange section 27a in order from the upstream side with respect to the flow direction of the water or water vapor flowing through the water supply path 2.

According to the methane generation system 60 configured as such, the water or water vapor flowing in the water supply path 2 is heated by at least any one of the eighth heat exchange section 23a, the ninth heat exchange section 24a, the tenth heat exchange section 25a, the eleventh heat exchange section 26a, or the twelfth heat exchange section 27a, in addition to the first preliminary heat exchange section 28. Therefore, since the amount of heat of the water or water vapor supplied to the SOEC co-electrolysis device 10 is further increased, it is possible to further promote the electrolysis in the SOEC co-electrolysis device 10.

In the example of FIG. 11, all of the eighth heat exchange section 23a, the ninth heat exchange section 24a, the tenth heat exchange section 25a, the eleventh heat exchange section 26a, and the twelfth heat exchange section 27a are provided, but at least only one or more of these need be provided. In a case where all of the eighth heat exchange section 23a, the ninth heat exchange section 24a, the tenth heat exchange section 25a, the eleventh heat exchange section 26a, and the twelfth heat exchange section 27a are provided, the effect of increasing the heat of the water or water vapor supplied to the SOEC co-electrolysis device 10 is maximized.

### Embodiment 12

Hereinafter, a methane generation system 61 according to Embodiment 12 of the present invention will be described with reference to FIG. 12. The same components as those of Embodiment 11 shown in FIG. 11 are denoted by the same reference numerals, and the description thereof will be omitted. Only the components different from those of Embodiment 8 will be described.

The methane generation system 61 has a configuration in which the methane generation system 60 of Embodiment 11 shown in FIG. 11 is arranged vertically, with the SOEC co-electrolysis device 10 provided above the methane reactor 11. Therefore, since the SOEC co-electrolysis device 10 is provided at a position higher than the methane reactor 11, the temperature difference of the fluid present in the vicinity of the heat transfer surface between the SOEC co-electrolysis device 10 and the methane reactor 11 can be increased. Therefore, in addition to the effects obtained by the methane generation system 60 according to Embodiment 11 shown in FIG. 11, the heat exchange performance between the SOEC co-electrolysis device 10 and the methane reactor 11 can be improved, thereby enhancing the methane conversion efficiency and stabilizing the methane generation amount.

### Embodiment 13

Hereinafter, a methane generation system 62 according to Embodiment 13 of the present invention will be described with reference to FIG. 13. The same components as those in Embodiment 7 shown in FIG. 7 are denoted by the same reference numerals, and their descriptions will be omitted. Only the components that are different from those in Embodiment 7 will be described.

The methane generation system 62 includes a second preliminary heat exchange section 29, where the carbon dioxide flowing through the carbon dioxide supply path 3 is heated by the reaction heat of the methane reactor 11, in the methane generation system 56 of Embodiment 7 shown in FIG. 7.

In the methane generation system 62 configured as such, since the amount of heat of the carbon dioxide supplied to the SOEC co-electrolysis device 10 is increased, it is possible to promote the electrolysis in the SOEC co-electrolysis device 10. Further, the methane conversion efficiency can be improved by dissipating the heat generated from the methane reactor 11.

### Embodiment 14

Hereinafter, a methane generation system 63 according to Embodiment 14 of the present invention will be described with reference to FIG. 14. The same components as those in Embodiment 13 shown in FIG. 13 are denoted by the same reference numerals, and their descriptions are omitted. Only the components that are different from those of Embodiment 9 will be described.

The methane generation system 63 has a configuration in which the methane generation system 62 of Embodiment 13 shown in FIG. 13 is arranged vertically, with the SOEC co-electrolysis device 10 provided above the methane reactor 11. Therefore, since the SOEC co-electrolysis device 10 is provided at a position higher than the methane reactor 11, the temperature difference of the fluid present in the vicinity of the heat transfer surface between the SOEC co-electrolysis device 10 and the methane reactor 11 can be increased. Therefore, in addition to the effects obtained by the methane generation system 62 according to Embodiment 13 shown in FIG. 13, the heat exchange performance between the SOEC co-electrolysis device 10 and the methane reactor 11 can be improved, thereby enhancing the methane conversion efficiency and stabilizing the methane generation amount.

### Embodiment 15

Hereinafter, a methane generation system 64 according to Embodiment 15 of the present invention will be described with reference to FIG. 15. The same components as those in Embodiment 7 shown in FIG. 7 are denoted by the same reference numerals, and their descriptions will be omitted. Only the components that are different from those in Embodiment 7 will be described.

In the methane generation system 56 of Embodiment 7 shown in FIG. 7, the methane generation system 64 includes a third preliminary heat exchange section 35 where the water or water vapor flowing in the water supply path 2 and carbon dioxide flowing in the carbon dioxide supply path 3 are heated by the reaction heat of the methane reactor 11.

In the methane generation system 64 configured as such, since the amount of heat of the water or water vapor and the carbon dioxide supplied to the SOEC co-electrolysis device 10 is increased, the electrolysis in the SOEC co-electrolysis device 10 can be promoted. Further, the methane reactor 11 performs heat exchange with a plurality of fluids, including water or water vapor and carbon dioxide. Therefore, more heat generated from the methane reactor 11 can be dissipated, and the methane conversion efficiency can be improved.

Here, in the third preliminary heat exchange section 35, the water or water vapor flowing in the water supply path 2 and the carbon dioxide flowing in the carbon dioxide supply path 3 may be mixed. Since a gas-liquid two-phase flow is formed by mixing, a more complex flow can be formed. For example, with the turbulence generated by the gas-liquid two-phase flow, it is possible to increase the heat transfer performance from the methane reactor 11 to the gas-liquid two-phase flow.

### Embodiment 16

Hereinafter, a methane generation system 65 according to Embodiment 16 of the present invention will be described with reference to FIG. 16. The same components as those in Embodiment 15 shown in FIG. 15 are denoted by the same reference numerals, and their descriptions will be omitted. Only the components that are different from those in Embodiment 15 will be described.

The methane generation system 65 has a configuration in which the methane generation system 64 of Embodiment 15 shown in FIG. 15 is arranged vertically, with the SOEC co-electrolysis device 10 provided above the methane reactor 11. Therefore, since the SOEC co-electrolysis device 10 is provided at a position higher than the methane reactor 11, the temperature difference of the fluid present in the vicinity of the heat transfer surface between the SOEC co-electrolysis device 10 and the methane reactor 11 can be increased. Therefore, in addition to the effect obtained by the methane generation system 64 according to Embodiment 15 shown in FIG. 15, the heat exchange performance between the SOEC co-electrolysis device 10 and the methane reactor 11 can be improved, thereby enhancing the methane conversion efficiency and stabilizing the methane generation amount.

### Embodiment 17

Hereinafter, a methane generation system 66 according to Embodiment 17 of the present invention will be described with reference to FIG. 17. The same components as those in Embodiment 9 shown in FIG. 9 are denoted by the same reference numerals, and their descriptions will be omitted. Only the components different from those in Embodiment 9 will be described.

In the methane generation system 66, similar to the methane generation system 58 of Embodiment 9 shown in FIG. 9, an ejector 40, which uses water or water vapor flowing through the water supply path 2 as a driving fluid, is provided in the water supply path 2, and the carbon dioxide supply path 3 is connected to the SOEC co-electrolysis device 10 via the ejector 40.

According to the methane generation system 66 configured as such, the carbon dioxide flowing through the carbon dioxide supply path 3 is drawn into the flow of water or water vapor, which serves as the driving fluid of the ejector 40. That is, by using a fluid machine such as a blower (not shown) which moves the carbon dioxide flowing in the carbon dioxide supply path 3 to the SOEC co-electrolysis device 10 in combination with the ejector 40, it is possible to reduce the power consumption of the fluid machine. In this way, the energy required for the operation of the methane generation system 66 can be reduced.

### Embodiment 18

Hereinafter, a methane generation system 67 according to Embodiment 18 of the present invention will be described with reference to FIG. 18. The same components as those in Embodiment 17 shown in FIG. 17 are denoted by the same reference numerals, and their descriptions will be omitted. Only the components that are different from those in Embodiment 17 will be described.

The methane generation system 67 has a configuration in which the methane generation system 66 of Embodiment 17 shown in FIG. 17 is arranged vertically, with the SOEC co-electrolysis device 10 provided above the methane reactor 11. Therefore, since the SOEC co-electrolysis device 10 is provided at a position higher than the methane reactor 11, the temperature difference of the fluid present in the vicinity of the heat transfer surface between the SOEC co-electrolysis device 10 and the methane reactor 11 can be increased. Therefore, in addition to the effects obtained by the methane generation system 66 according to Embodiment 17 shown in FIG. 17, the heat exchange performance between the SOEC co-electrolysis device 10 and the methane reactor 11 can be improved, thereby enhancing the methane conversion efficiency and stabilizing the methane generation amount.

### Embodiment 19

Hereinafter, a methane generation system 68 according to Embodiment 19 of the present invention will be described with reference to FIG. 19. The same components as those in Embodiment 13 shown in FIG. 13 are denoted by the same reference numerals, and their descriptions will be omitted. Only the components that are different from those in Embodiment 13 will be described.

In the methane generation system 68, the ejector 40, which uses the carbon dioxide flowing through the carbon dioxide supply path 3 as the driving fluid, is provided in the carbon dioxide supply path 3, in the methane generation system 62 of Embodiment 13 shown in FIG. 13. The water supply path 2 is connected to the SOEC co-electrolysis device 10 via the ejector 40.

With the methane generation system 62 configured as such, water or water vapor flowing through the water supply path 2 is drawn into the flow of carbon dioxide, which is the driving fluid of the ejector 40. That is, by using a fluid machine such as a pump or blower (not shown) that moves the water or water vapor flowing in the water supply path 2 to the SOEC co-electrolysis device 10 in combination with the ejector 40, it is possible to reduce the power consumption of the fluid machine. In this way, the energy required for the operation of the methane generation system 68 can be reduced.

### Embodiment 20

Hereinafter, a methane generation system 69 according to Embodiment 20 of the present invention will be described with reference to FIG. 20. The same components as those in Embodiment 19 shown in FIG. 19 are denoted by the same reference numerals, and their descriptions are omitted. Only the components that are different from those of Embodiment 19 will be described.

The methane generation system 69 has a configuration in which the methane generation system 68 of Embodiment 19 shown in FIG. 19 is arranged vertically, with the SOEC co-electrolysis device 10 provided above the methane reactor 11. Therefore, since the SOEC co-electrolysis device 10 is provided at a position higher than the methane reactor 11, the temperature difference of the fluid present in the vicinity of the heat transfer surface between the SOEC co-electrolysis device 10 and the methane reactor 11 can be increased. Therefore, in addition to the effects obtained by the methane generation system 68 according to Embodiment 19 shown in FIG. 19, the heat exchange performance between the SOEC co-electrolysis device 10 and the methane reactor 11 can be improved, thereby enhancing the methane conversion efficiency and stabilizing the methane generation amount.

### Embodiment 21

Hereinafter, a methane generation system 70 according to Embodiment 21 of the present invention will be described with reference to FIG. 21. The same components as those in Embodiment 19 shown in FIG. 19 are denoted by the same reference numerals, and their descriptions are omitted. Only the components that are different from those of Embodiment 19 will be described.

The methane generation system 70 includes at least any one of a thirteenth heat exchange section 23b that performs heat exchange with external ventilation exhaust heat, a fourteenth heat exchange section 24b that performs heat exchange with external air conditioning exhaust heat, a fifteenth heat exchange section 25b that performs heat exchange with external hot water supply exhaust heat, a sixteenth heat exchange section 26b that performs heat exchange with external boiler exhaust heat, or a seventeenth heat exchange section 27b that performs heat exchange with external SOFC fuel cell exhaust heat, upstream of the ejector 40 with respect to the flow direction of water or water vapor flowing through the water supply path 2 in the methane generation system 68 of Embodiment 19 shown in FIG. 19.

Here, the thirteenth heat exchange section 23b, the fourteenth heat exchange section 24b, the fifteenth heat exchange section 25b, the sixteenth heat exchange section 26b, and the seventeenth heat exchange section 27b are provided on the water supply path 2 such that the heat exchange section with a lower temperature is disposed on the upstream side with respect to the flow direction of the water or water vapor flowing through the water supply path 2.

Therefore, the thirteenth heat exchange section 23b having the lowest temperature is provided the most upstream with respect to the flow direction of the water or water vapor flowing through the water supply path 2, and the seventeenth heat exchange section 27b having the highest temperature is provided the most downstream with respect to the flow direction of the water or water vapor flowing through the water supply path 2. The fourteenth heat exchange section 24b, the fifteenth heat exchange section 25b, and the sixteenth heat exchange section 26b are provided between the thirteenth heat exchange section 23b and the seventeenth heat exchange section 27b in order from the upstream side with respect to the flow direction of the water or water vapor flowing through the water supply path 2.

According to the methane generation system 60 configured as such, the water or water vapor flowing through the water supply path 2 before being suctioned into the ejector 40 is heated by at least any one of the thirteenth heat exchange section 23b, the fourteenth heat exchange section 24b, the fifteenth heat exchange section 25b, the sixteenth heat exchange section 26b, or the seventeenth heat exchange section 27b. Therefore, the water or water vapor flowing through the water supply path 2, which is suctioned by the ejector 40, can be converted into a gas state.

Therefore, the suctioning effect of the ejector 40 can be increased. That is, by using a fluid machine such as a pump or blower (not shown) that moves the water or water vapor flowing in the water supply path 2 to the SOEC co-electrolysis device 10 in combination with the ejector 40, it is possible to reduce the power consumption of the fluid machine. In this way, the energy required for the operation of the methane generation system 70 can be reduced.

In the example of FIG. 21, although all of the thirteenth heat exchange section 23b, the fourteenth heat exchange section 24b, the fifteenth heat exchange section 25b, the sixteenth heat exchange section 26b, and the seventeenth heat exchange section 27b are provided, only at least one or more of these need be provided. In a case where all of the thirteenth heat exchange section 23b, the fourteenth heat exchange section 24b, the fifteenth heat exchange section 25b, the sixteenth heat exchange section 26b, and the seventeenth heat exchange section 27b are provided, the degree of converting the water or water vapor suctioned by the ejector 40 into a gas state is the highest, and the effect of increasing the amount of heat of the water or water vapor supplied to the SOEC co-electrolysis device 10 is the largest.

### Embodiment 22

Hereinafter, a methane generation system 71 according to Embodiment 22 of the present invention will be described with reference to FIG. 22. The same components as those in Embodiment 21 shown in FIG. 21 are denoted by the same reference numerals, and their descriptions will be omitted. Only the components that are different from those in Embodiment 21 will be described.

The methane generation system 71 has a configuration in which the methane generation system 70 of Embodiment 21 shown in FIG. 21 is arranged vertically, with the SOEC co-electrolysis device 10 provided above the methane reactor 11. Therefore, since the SOEC co-electrolysis device 10 is provided at a position higher than the methane reactor 11, the temperature difference of the fluid present in the vicinity of the heat transfer surface between the SOEC co-electrolysis device 10 and the methane reactor 11 can be increased. Therefore, in addition to the effects obtained by the methane generation system 70 according to Embodiment 21 shown in FIG. 21, the heat exchange performance between the SOEC co-electrolysis device 10 and the methane reactor 11 can be improved, thereby enhancing the methane conversion efficiency and stabilizing the methane generation amount.

### Embodiment 23

Hereinafter, a methane generation system 72 according to Embodiment 23 of the present invention will be described with reference to FIG. 23. The same components as those in Embodiment 9 shown in FIG. 9 are denoted by the same reference numerals, and their descriptions will be omitted. Only the components different from those in Embodiment 9 will be described.

The methane generation system 72 includes at least any one of an eighth heat exchange section 23a that performs heat exchange with external ventilation exhaust heat, a ninth heat exchange section 24a that performs heat exchange with external air conditioning exhaust heat, a tenth heat exchange section 25a that performs heat exchange with external hot water supply exhaust heat, an eleventh heat exchange section 26a that performs heat exchange with external boiler exhaust heat, or a twelfth heat exchange section 27a that performs heat exchange with external SOFC fuel cell exhaust heat, all of which heat water or water vapor flowing in the water supply path 2 upstream of the first preliminary heat exchange section 28, with respect to the flow direction of the water or water vapor flowing in the water supply path 2, in the methane generation system 58 of Embodiment 9 shown in FIG. 9.

Here, the eighth heat exchange section 23a, the ninth heat exchange section 24a, the tenth heat exchange section 25a, the eleventh heat exchange section 26a, and the twelfth heat exchange section 27a are provided in the water supply path 2 such that the heat exchange section with a lower temperature is disposed upstream with respect to the flow direction of the water or water vapor flowing through the water supply path 2.

Therefore, the eighth heat exchange section 23a having the lowest temperature is provided the most upstream with respect to the flow direction of the water or water vapor flowing through the water supply path 2, and the twelfth heat exchange section 27a having the highest temperature is provided the most downstream with respect to the flow direction of the water or water vapor flowing through the water supply path 2. The ninth heat exchange section 24a, the tenth heat exchange section 25a, and the eleventh heat exchange section 26a are provided between the eighth heat exchange section 23a and the twelfth heat exchange section 27a in order from the upstream side with respect to the flow direction of the water or water vapor flowing through the water supply path 2.

In addition, in the water supply path 2, a second heater 22a that heats the water or water vapor flowing in the water supply path 2 is provided downstream of the first preliminary heat exchange section 28.

With the methane generation system 72 configured as such, the water or water vapor flowing in the water supply path 2 is heated by at least any one of the eighth heat exchange section 23a, the ninth heat exchange section 24a, the tenth heat exchange section 25a, the eleventh heat exchange section 26a, the twelfth heat exchange section 27a, and the second heater 22a, in addition to the heat generated by the methane reactor 11. Therefore, the heat of the water or water vapor supplied to the SOEC co-electrolysis device 10 is increased, and it is possible to promote electrolysis in the SOEC co-electrolysis device 10. Further, the methane conversion efficiency can be improved by dissipating the heat generated from the methane reactor 11.

In the example of FIG. 23, although all of the eighth heat exchange section 23a, the ninth heat exchange section 24a, the tenth heat exchange section 25a, the eleventh heat exchange section 26a, and the twelfth heat exchange section 27a are provided, only at least one or more of these need be provided. In a case where all of the eighth heat exchange section 23a, the ninth heat exchange section 24a, the tenth heat exchange section 25a, the eleventh heat exchange section 26a, and the twelfth heat exchange section 27a are provided, the effect of increasing the heat of the water or water vapor supplied to the SOEC co-electrolysis device 10 is maximized.

### Embodiment 24

Hereinafter, a methane generation system 73 according to Embodiment 24 of the present invention will be described with reference to FIG. 24. The same components as those in Embodiment 23 shown in FIG. 23 are denoted by the same reference numerals, and their descriptions are omitted. Only the components that are different from those of Embodiment 23 will be described.

The methane generation system 73 has a configuration in which the methane generation system 72 of Embodiment 23 shown in FIG. 23 is arranged vertically, with the SOEC co-electrolysis device 10 provided above the methane reactor 11. Therefore, since the SOEC co-electrolysis device 10 is provided at a position higher than the methane reactor 11, the temperature difference of the fluid present in the vicinity of the heat transfer surface between the SOEC co-electrolysis device 10 and the methane reactor 11 can be increased. Therefore, in addition to the effects obtained by the methane generation system 72 according to Embodiment 23 shown in FIG. 23, the heat exchange performance between the SOEC co-electrolysis device 10 and the methane reactor 11 can be improved, thereby enhancing the methane conversion efficiency and stabilizing the methane generation amount.

### Embodiment 25

Hereinafter, a methane generation system 74 according to Embodiment 25 of the present invention will be described with reference to FIG. 25. The same components as those in Embodiment 23 shown in FIG. 23 are denoted by the same reference numerals, and their descriptions are omitted. Only the components that are different from those of Embodiment 23 will be described.

The methane generation system 74 differs from the methane generation system 72 of Embodiment 23 shown in FIG. 23 in that the position of the twelfth heat exchange section 27a is provided between the first preliminary heat exchange section 28 and the second heater 22a.

In the methane generation system 74 configured as such, the twelfth heat exchange section 27a is provided downstream of the first preliminary heat exchange section 28 with respect to the flow direction of the water or water vapor flowing through the water supply path 2. Therefore, even if the twelfth heat exchange section 27a, which has the highest temperature among the eighth heat exchange section 23a to twelfth heat exchange section 27a, heats the water or water vapor flowing in the water supply path 2 at a temperature higher than that of the methane reactor 11, the heating of both the methane reactor 11 and the twelfth heat exchange section 27a can be effectively utilized.

### Embodiment 26

Hereinafter, a methane generation system 75 according to Embodiment 26 of the present invention will be described with reference to FIG. 26. The same components as those in Embodiment 25 shown in FIG. 25 are denoted by the same reference numerals, and their description will be omitted. Only the components that are different from those in Embodiment 25 will be described.

The methane generation system 75 has a configuration in which the methane generation system 74 of Embodiment 25 shown in FIG. 25 is arranged vertically, with the SOEC co-electrolysis device 10 provided above the methane reactor 11. Therefore, since the SOEC co-electrolysis device 10 is provided at a position higher than the methane reactor 11, the temperature difference of the fluid present in the vicinity of the heat transfer surface between the SOEC co-electrolysis device 10 and the methane reactor 11 can be increased. Therefore, in addition to the effect obtained by the methane generation system 74 according to Embodiment 25 shown in FIG. 25, the heat exchange performance between the SOEC co-electrolysis device 10 and the methane reactor 11 can be improved, thereby enhancing the methane conversion efficiency and stabilizing the methane generation amount.

The technical scope of the present invention is not limited to Embodiments described above, and various modifications can be made within the scope of the present invention as defined in the claims.

For example, in the methane generation system 62 of Embodiment 13 and the methane generation system 63 of Embodiment 14, as shown in FIGS. 13 and 14, in the carbon dioxide supply path 3, at least any one of the eighth heat exchange section 23a that performs heat exchange with external ventilation exhaust heat, the ninth heat exchange section 24a that performs heat exchange with external air conditioning exhaust heat, the tenth heat exchange section 25a that performs heat exchange with external hot water supply exhaust heat, the eleventh heat exchange section 26a that performs heat exchange with external boiler exhaust heat, or the twelfth heat exchange section 27a that performs heat exchange with external SOFC fuel cell exhaust heat may be provided downstream of the second preliminary heat exchange section 29 in the flow direction of the carbon dioxide flowing through the carbon dioxide supply path 3. In addition, the carbon dioxide supply path 3 may further include the second heater 22a downstream of the twelfth heat exchange section 27a in the flow direction of the carbon dioxide flowing through the carbon dioxide supply path 3.

In this case, as in the methane generation system 60 of Embodiment 11 and the methane generation system 61 of Embodiment 12, as shown in FIGS. 11 and 12, the carbon dioxide flowing through the carbon dioxide supply path 3 is heated by at least any one of the eighth heat exchange section 23a, the ninth heat exchange section 24a, the tenth heat exchange section 25a, the eleventh heat exchange section 26a, or the twelfth heat exchange section 27a in addition to the second preliminary heat exchange section 29. Therefore, since the amount of heat of the carbon dioxide supplied to the SOEC co-electrolysis device 10 is further increased, it is possible to further promote the electrolysis in the SOEC co-electrolysis device 10. This effect is greatest when all of the eighth heat exchange section 23a, the ninth heat exchange section 24a, the tenth heat exchange section 25a, the eleventh heat exchange section 26a, and the twelfth heat exchange section 27a are provided. In a case where the second heater 22a is further provided, the effect can be further enhanced.

For example, in the methane generation system 62 of Embodiment 13 and the methane generation system 63 of Embodiment 14, as shown in FIGS. 13 and 14, in the carbon dioxide supply path 3, at least any one of the eighth heat exchange section 23a that performs heat exchange with external ventilation exhaust heat, the ninth heat exchange section 24a that performs heat exchange with external air conditioning exhaust heat, the tenth heat exchange section 25a that performs heat exchange with external hot water supply exhaust heat, the eleventh heat exchange section 26a that performs heat exchange with external boiler exhaust heat, or the twelfth heat exchange section 27a that performs heat exchange with external SOFC fuel cell exhaust heat may be provided upstream of the second preliminary heat exchange section 29 in the flow direction of the carbon dioxide flowing through the carbon dioxide supply path 3. In this case, the second heater 22a may be further provided downstream of the second preliminary heat exchange section 29 in the flow direction of the carbon dioxide flowing in the carbon dioxide supply path 3.

In this case, similarly to the methane generation system 72 of Embodiment 23 and the methane generation system 73 of Embodiment 24, as shown in FIGS. 23 and 24, the carbon dioxide flowing through the carbon dioxide supply path 3 is heated by at least any one of the eighth heat exchange section 23a, the ninth heat exchange section 24a, the tenth heat exchange section 25a, the eleventh heat exchange section 26a, or the twelfth heat exchange section 27a in addition to the second preliminary heat exchange section 29. Therefore, since the amount of heat of the carbon dioxide supplied to the SOEC co-electrolysis device 10 is further increased, it is possible to further promote the electrolysis in the SOEC co-electrolysis device 10. This effect is greatest when all of the eighth heat exchange section 23a, the ninth heat exchange section 24a, the tenth heat exchange section 25a, the eleventh heat exchange section 26a, and the twelfth heat exchange section 27a are provided. In a case where the second heater 22a is further provided, the effect can be further enhanced.

Similarly, in the methane generation system 70 of Embodiment 21 and the methane generation system 71 of Embodiment 22, as shown in FIGS. 21 and 22, at least any one of the eighth heat exchange section 23a that performs heat exchange with external ventilation exhaust heat, the ninth heat exchange section 24a that performs heat exchange with external air conditioning exhaust heat, the tenth heat exchange section 25a that performs heat exchange with external hot water supply exhaust heat, the eleventh heat exchange section 26a that performs heat exchange with external boiler exhaust heat, or the twelfth heat exchange section 27a that performs heat exchange with external SOFC fuel cell exhaust heat may be provided upstream or downstream of the second preliminary heat exchange section 29 in the carbon dioxide supply path 3 in the flow direction of the carbon dioxide flowing through the carbon dioxide supply path 3.

In this case, the carbon dioxide flowing in the carbon dioxide supply path 3 is heated by at least any one of the eighth heat exchange section 23a, the ninth heat exchange section 24a, the tenth heat exchange section 25a, the eleventh heat exchange section 26a, or the twelfth heat exchange section 27a, in addition to the second preliminary heat exchange section 29. Therefore, since the amount of heat of the carbon dioxide supplied to the SOEC co-electrolysis device 10 is further increased, it is possible to further promote the electrolysis in the SOEC co-electrolysis device 10. This effect is greatest when all of the eighth heat exchange section 23a, the ninth heat exchange section 24a, the tenth heat exchange section 25a, the eleventh heat exchange section 26a, and the twelfth heat exchange section 27a are provided.

In Embodiment 4 and the subsequent, a configuration has been described in which the SOEC co-electrolysis device 10 is arranged vertically and provided at a higher position than the methane reactor 11. However, the methane generation system 50 of Embodiment 1 and the methane generation system 51 of Embodiment 2 may also be configured such that the SOEC co-electrolysis device 10 is arranged vertically and provided at a higher position than the methane reactor 11. In this case as well, the same effect as in Embodiment 4 can be obtained.

Although it has been described in the description of Embodiment 3 that the SOEC co-electrolysis device 10 and the methane reactor 11 may be physically integrally formed with each other, the SOEC co-electrolysis device 10 and the methane reactor 11 may be physically integrally formed with each other in other Embodiments too.

### List of Reference Signs

- 1:: Power supply path
- 2:: Water supply path
- 3:: Carbon dioxide supply path
- 4:: Connection path
- 5:: Heat transfer flow path
- 6:: Gas path
- 10:: SOEC co-electrolysis device
- 11:: Methane reactor
- 20:: First heat exchange section

## Claims

1. A methane generation system, comprising:
a water supply path that supplies water or water vapor;
a carbon dioxide supply path that supplies carbon dioxide;
a power supply path that supplies power;
an SOEC co-electrolysis device to which the water supply path, the carbon dioxide supply path and the power supply path are connected;
a methane reactor;
a connection path that connects the SOEC co-electrolysis device and the methane reactor; and
a first heat exchange section that performs heat exchange between the SOEC co-electrolysis device and the methane reactor.

2. The methane generation system according to Claim 1, wherein
the SOEC co-electrolysis device is provided at a higher position than the methane reactor.

3. The methane generation system according to Claim 1 or 2, further comprising:
a heat transfer flow path that supplies at least a part of the water or water vapor discharged from the methane reactor to the SOEC co-electrolysis device.

4. The methane generation system according to Claim 3, wherein
the SOEC co-electrolysis device and the methane reactor are physically integrally formed, and
the heat transfer flow path includes a second heat exchange section that performs heat exchange with external exhaust heat.

5. The methane generation system according to Claim 4, wherein
the heat transfer flow path includes a heater.

6. The methane generation system according to Claim 4 or 5, wherein
the second heat exchange section includes at least any one of a third heat exchange section that performs heat exchange with ventilation exhaust heat, a fourth heat exchange section that performs heat exchange with air conditioning exhaust heat, a fifth heat exchange section that performs heat exchange with hot water supply exhaust heat, a sixth heat exchange section that performs heat exchange with boiler exhaust heat, or a seventh heat exchange section that performs heat exchange with SOFC fuel cell exhaust heat.

7. The methane generation system according to Claim 6, further comprising:
a preliminary heat exchange section that heats the water or water vapor supplied to the SOEC co-electrolysis device through the water supply path by reaction heat of the methane reactor.

8. The methane generation system according to Claim 7, wherein
the water supply path includes an ejector, and
the carbon dioxide supply path is connected to the SOEC co-electrolysis device via the ejector.

9. The methane generation system according to Claim 6, further comprising:
a preliminary heat exchange section that heats carbon dioxide supplied to the SOEC co-electrolysis device by reaction heat of the methane reactor.

10. The methane generation system according to Claim 7, further comprising:
a preliminary heat exchange section that heats carbon dioxide supplied to the SOEC co-electrolysis device by the reaction heat of the methane reactor.

11. The methane generation system according to Claim 9, wherein
the carbon dioxide supply path includes an ejector, and
the water supply path is connected to the SOEC co-electrolysis device via the ejector.

12. The methane generation system according to Claim 7, wherein
the water supply path includes at least any one of an eighth heat exchange section that performs heat exchange with ventilation exhaust heat, a ninth heat exchange section that performs heat exchange with air conditioning exhaust heat, a tenth heat exchange section that performs heat exchange with hot water supply exhaust heat, an eleventh heat exchange section that performs heat exchange with boiler exhaust heat, or a twelfth heat exchange section that performs heat exchange with SOFC fuel cell exhaust heat.

13. The methane generation system according to Claim 9 or 11, wherein
the water supply path includes at least any one of an eighth heat exchange section that performs heat exchange with ventilation exhaust heat, a ninth heat exchange section that performs heat exchange with air conditioning exhaust heat, a tenth heat exchange section that performs heat exchange with hot water supply exhaust heat, an eleventh heat exchange section that performs heat exchange with boiler exhaust heat, or a twelfth heat exchange section that performs heat exchange with SOFC fuel cell exhaust heat.

14. The methane generation system according to Claim 12, wherein
the water supply path includes a heater.

15. The methane generation system according to any one of Claims 6 to 14, wherein
among the third heat exchange section, the fourth heat exchange section, the fifth heat exchange section, the sixth heat exchange section, and the seventh heat exchange section, the lower the temperature of the heat exchange section, the more upstream the heat exchange section is disposed with respect to a flow direction of the water or water vapor flowing through the heat transfer flow path.

16. The methane generation system according to any one of Claims 12 to 15, wherein
among the eighth heat exchange section, the ninth heat exchange section, the tenth heat exchange section, the eleventh heat exchange section, and the twelfth heat exchange section, the lower the temperature of the heat exchange section, the more upstream the heat exchange section is disposed with respect to a flow direction of the water or water vapor flowing through the water supply path.

17. A methane generation system, comprising:
a water supply path that supplies water or water vapor;
a carbon dioxide supply path that supplies carbon dioxide;
a power supply path that supplies power;
an SOEC co-electrolysis device to which the water supply path, the carbon dioxide supply path and the power supply path are connected;
a methane reactor;
a connection path that connects the SOEC co-electrolysis device and the methane reactor;
a first heat exchange section that performs heat exchange between the SOEC co-electrolysis device and the methane reactor; and
a preliminary heat exchange section that heats the water or water vapor supplied through the water supply path to the SOEC co-electrolysis device by reaction heat of the methane reactor.
